# EUROPÄISCHE PATENTSCHRIFT

(11) **EP 2 679 470 B1**
(45) Veröffentlichungstag und Bekanntmachung des Hinweises auf die Patenterteilung: **27.05.2015**
(21) Anmeldenummer: 13002897.0
(22) Anmeldetag: 05.06.2013
(51) Int. Cl.: B62D 13/00

(54) **Vorrichtung zum Lenken eines landwirtschaftlichen Anbaugeräts**
Device for steering an agricultural device
Dispositif destiné à diriger un elément agricole

(30) Priorität: 25.06.2012 DE 102012012572
(43) Veröffentlichungstag der Anmeldung: 01.01.2014
(73) Patentinhaber: Alois Pöttinger Maschinenfabrik Ges.m.b.H., 4710 Grieskirchen (AT)
(72) Erfinder: Reininger, Markus, 4753 Taiskirchen (AT)
(74) Vertreter: Thoma, Michael

(56) Entgegenhaltungen:
- EP-A1- 2 145 813
- DE-T2- 60 319 896

## Beschreibung

Die vorliegende Erfindung betrifft eine Vorrichtung zum Lenken eines landwirtschaftlichen Anbaugeräts, das an einen Schlepper anbaubar ist und zumindest eine lenkbare Achse besitzt, mit einem Lenkaktor zum Einlenken der genannten Achse und/oder des daran vorgesehenen zumindest einen Rades des Anbaugeräts, sowie einer Lenkwinkelsteuervorrichtung zur Ansteuerung des Lenkaktors.

Bei landwirtschaftlichen Anbaugeräten ist es aus verschiedenen Gründen wünschenswert, bei Kurvenfahrten des Schleppers auch an der Fahrwerksachse bzw. den Fahrwerksachsen des Anbaugeräts einen Lenkeinschlag vorzusehen. Hierdurch kann nicht nur das Kurvenschneiden des Anbaugeräts reduziert werden, sondern auch das Kurvenfahrverhalten des Anbaugeräts an verschiedene Anwendungsfälle angepasst werden. Beispielsweise ist es auf Feldern mit hohem Pflanzenstand bisweilen wünschenswert, das Anbaugerät derart zu lenken, dass es zusammen mit dem Schlepper auf einer Kreisbahn fährt, um möglichst wenig Pflanzen niederzudrücken bzw. zu beschädigen. Andererseits ist ein solches spurtreues Nachfahren des Anbaugeräts bei anderen Anwendungsfällen nicht erwünscht, beispielsweise um bei weichen Böden die Fahrspur des Schleppers durch das nachfahrende Anbaugerät nicht nochmals zu verdichten. Je nach Anwendungsfall können unterschiedliche Lenkstrategien vorteilhaft sein.

Das Einlenken der zumindest einen Achse des Anbaugeräts kann hierbei auf verschiedene Art und Weise gesteuert werden. Beispielsweise ist es bekannt, zusätzlich zur Anhängerdeichsel Lenkstangen mit dem Schlepper zu koppeln, die dann, wenn bei Kurvenfahrten des Schleppers die Anhängerdeichsel gegenüber dem Schlepper abknickt bzw. einlenkt, die lenkbare Achse am Anbaugerät nachlenkt. Anstelle einer solchen mechanischen Zwangskoppelung wurde auch bereits vorgeschlagen, den Einlenkwinkel der Anhängerdeichsel sensorisch zu erfassen und in Abhängigkeit dieses Einlenkwinkels der Anhängerdeichsel die Räder am Anbaugerät einzulenken. Am Anbaugerät können hierzu Lenkaktoren beispielsweise in Form von Hydraulikzylindern oder Elektromotoren vorgesehen sein, die von einem Jobrechner angesteuert werden, welcher das genannte Deichsel-Einlenksignal verarbeitet.

Die Schrift EP 2145813 schlägt vor, die lenkbaren Achsen von landwirtschaftlichen Anbaugeräten in Abhängigkeit der Winkelgeschwindigkeit des Zugfahrzeugs zu lenken. Hierzu wird am Zugfahrzeug ein Gyroskop angebracht, dessen Signal von einer Lenkwinkelsteuervorrichtung verarbeitet wird, um die Lenkaktoren am Anbaugerät anzusteuern.

Aus der Schrift DE 603 19 896 T2 ist eine Feldspritze mit lenkbaren Rädern bekannt, die einen Winkeldetektor zum Erfassen des Winkels zwischen der Deichsel der Feldspritze und dem Schlepper, genauer gesagt des Winkels zwischen einer Längsachse der Zugmaschine und einer Längsachse der Feldspritze besitzt. Die Räder der Feldspritze werden in Abhängigkeit dieses Winkels zwischen Feldspritze und Schlepper gelenkt, um die Räder der Feldspritze in der Spur der Räder des Schleppers zu halten, wobei hier neben dem aktuellen Wert des genannten Winkels auch ein zeitlicher Mittelwert berücksichtigt wird.

Der vorliegenden Erfindung liegt die Aufgabe zugrunde, eine verbesserte Vorrichtung der eingangs genannten Art zu schaffen, die Nachteile des Standes der Technik vermeidet und Letzteren in vorteilhafter Weise weiterbildet. Insbesondere soll ohne sensorischen Mehraufwand eine präzise Steuerung des Lenkeinschlags am Anbaugerät ermöglicht werden, ohne dies durch einen erhöhten Montageaufwand beim Anbau des Geräts an den Schlepper zu erkaufen.

Erfindungsgemäß wird diese Aufgabe durch eine Vorrichtung gemäß Anspruch 1 gelöst. Bevorzugte Ausgestaltungen der Erfindung sind Gegenstand der abhängigen Ansprüche.

Es wird vorgeschlagen, den Lenkaktor des Anbaugeräts in Abhängigkeit des aktuellen Lenkwinkels und/oder Kurvenradius des Schleppers anzusteuern. Erfindungsgemäß ist vorgesehen, dass die Lenkwinkelsteuervorrichtung zur Bestimmung des Ansteuersignals für den Lenkaktor des Anbaugeräts ein an einem Datenbussystem des Schleppers bereitgestelltes Schlepper-Kurvenfahrsignal verwendet. Das genannten Datenbussystem kann insbesondere ein genormtes Isobussystem sein, welches schlepperseitig den aktuellen Lenkwinkel bzw. Lenkeinschlag und/oder Kurvenradius des Schleppers bereitstellt, in Abhängigkeit dessen die Lenkwinkelsteuervorrichtung den Lenkeinschlag der zumindest einen lenkbaren Achse des Anbaugeräts bestimmen kann.

Die Verwendung des am Isobus des Schleppers bereitgestellten Kurvenfahrsignals für die Ansteuerung des Lenkaktors am Anbaugerät bringt diverse Vorteile mit sich. Beispielsweise entfällt ein umständlicher Anbau bzw. erhöhter Montageaufwand beim Ankuppeln des Anbaugeräts an den Schlepper. Es müssen weder zusätzliche mechanische Bauteile wie Lenkstangen angekoppelt werden, noch sind separate Signalkabel beispielsweise an Gyroskope oder dergleichen anzuschließen. Es reicht aus, das Anbaugerät an die an sich bekannte Isobussteckdose des Schleppers anzuschließen. Zum anderen kann auf zusätzliche sensorische Bauteile wie beispielsweise das genannte Gyroskop verzichtet werden. Hiervon abgesehen kann der Lenkeinschlag am Anbaugerät weitgehend verzögerungsfrei gesteuert werden, da das Kurvenfahrsignal des Schleppers am genannten Bussystem verzögerungsfrei Kurvenfahrten des Schleppers angibt, während bei separat angebrachten Zusatzsensoren wie beispielsweise einem Winkelgeber, der den Deichseleinlenkwinkel angibt, oder einem Gyroskop die Kurvenfahrt schon begonnen haben muss, bevor ein entsprechendes Stellsignal bereitgestellt wird. Hierdurch kann insbesondere ein noch geringerer Reifenverschleiß erreicht werden, da die Lenkung nicht mehr nacheilend ist.

Das vom Bussystem des Schleppers abgegriffene Kurvenfahrsignal kann grundsätzlich verschiedene die Kurvenfahrt charakterisierende Größen beinhalten bzw. umfassen. Erfindungsgemäß kann dies den Lenkeinschlagwinkel der gelenkten Schlepperachse wiedergeben. Zusätzlich kann das Schlepper-Kurvenfahrsignal auch andere die Kurvenfahrt charakterisierende Größen wie beispielsweise die Winkelgeschwindigkeit oder den Kurvenradius des Schleppers, welcher aus dem Lenkeinschlag und ggf. anderen Geometriegrößen bestimmt werden kann, umfassen. Die Lenkwinkelsteuervorrichtung verarbeitet die jeweils bereitgestellte Größe, die die Kurvenfahrt des Schleppers charakterisiert, um hieraus den gewünschten Lenkwinkel am Anbaugerät zu bestimmen und das Ansteuersignal für den Lenkaktor am Anbaugerät bereitzustellen.

In Weiterbildung der Erfindung kann die Lenkwinkelsteuervorrichtung auch eine Fahrgeschwindigkeit, insbesondere ein am Bussystem des Schleppers bereitgestelltes Fahrgeschwindigkeitssignal zur Bestimmung des Ansteuersignals für den Lenkaktor am Anbaugerät verwenden. Durch die Berücksichtigung des Fahrgeschwindigkeitssignals können sich ergebende Fliehkräfte und Fahrdynamikeinflüsse berücksichtigt werden. Insbesondere kann der am Anbaugerät einzustellende Lenkwinkel an die Fahrgeschwindigkeit angepasst werden, beispielsweise dergestalt, dass mit zunehmend höherer Fahrgeschwindigkeit kleinere Lenkwinkel am Anbaugerät eingestellt werden bzw. ein maximaler Lenkwinkel am Anbaugerät zunehmend begrenzt oder kleiner eingestellt wird, um die Fahrstabilität des Gespanns zu erhöhen oder auch um eine Übersteuerungstendenz am Anbaugerät zu dämpfen. Gegebenenfalls können jedoch auch andere fahrgeschwindigkeitsabhängige Lenkwinkelanpassungen am Anbaugerät vorgenommen werden, beispielsweise um für feldarbeitstypische Fahrgeschwindigkeiten andere Lenkwinkelabhängigkeiten zu realisieren als für straßentypische Fahrgeschwindigkeiten.

In vorteilhafter Weiterbildung der Erfindung kann die Lenkwinkelsteuervorrichtung den Lenkaktor des Anbaugeräts alleine in Abhängigkeit von am Isobus des Schleppers bereitgestellten Signalen steuern. Hierdurch kann gänzlich auf andere Sensoren oder Steuermittel wie beispielsweise Lenkstangen verzichtet werden. Gegebenenfalls können jedoch auch zusätzliche Steuergrößen, die nicht vom Isobus des Schleppers bereitgestellt werden, berücksichtigt werden, beispielsweise um ein redundantes Lenken der Anbaugeräteachse zu ermöglichen bzw. ein redundantes Lenksystem bereitzustellen.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Seitenansicht eines landwirtschaftlichen Anbaugeräts in Form eines Ladewagens, der ein zweiachsiges Fahrwerk besitzt und über eine Deichsel an einen Schlepper angebaut ist, und
- Fig. 2:: eine schematische Draufsicht auf das Schlepper-Ladewagen-Gespann aus Fig. 1 bei einer Kurvenfahrt, die das Einlenken der Fahrwerksachsen des Ladewagens verdeutlicht.

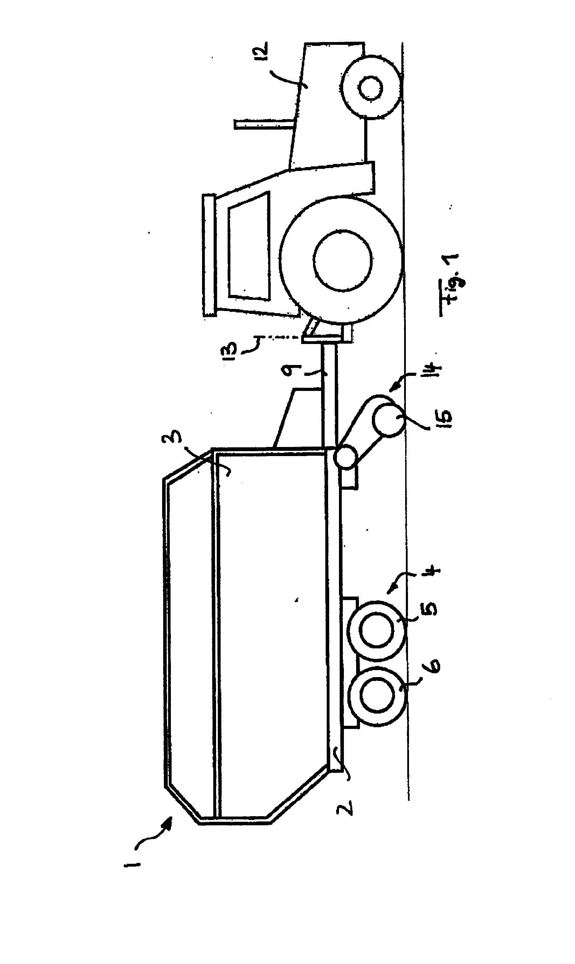

Fig. 1 zeigt ein landwirtschaftliches Anbaugerät in Form eines Ladewagens 1, der in an sich bekannter Weise einen Maschinenrahmen 2 umfasst, der einen Erntegutspeicher 3 trägt und durch ein Fahrwerk 4 am Boden abgestützt ist. Der genannte Erntegutspeicher 3 kann in an sich bekannter Weise mittels einer Aufnahmevorrichtung 14 beispielsweise umfassend eine Pickup 15 mit Erntegut beladen werden, welches vom Boden aufgenommen wird.

Über eine starre Deichsel 9 kann der Ladewagen 1 an einem Schlepper 12 um eine aufrechte Deichselanlenkachse 13 gelenkig angelenkt werden, um den Ladewagen 1 mit dem Schlepper 12 zu ziehen.

Das Fahrwerk 4 des Ladewagens 1 kann gemäß der gezeichneten Ausführung zwei Achsen 5 und 6 mit jeweils daran vorgesehenen Rädern umfassen, wobei eine oder beide der genannten Achsen 5 und 6 lenkbar ausgebildet sein kann. Beispielsweise kann die vordere Achse 5 starr, d.h. unlenkbar sein, während die hintere Achse 6 einlenkbar ausgebildet sein kann.

Anstelle der in der Zeichnung dargestellten zweiachsigen Fahrwerksausbildung können jedoch auch andere Fahrwerkstypen vorgesehen sein, und zwar sowohl an dem in der Zeichnung gezeigten Ladewagen als auch an anderen Anbaugerätetypen, da der gezeichnete Ladewagen nur beispielhaft gezeigt ist. Hierbei können je nach Anbaugerätetyp Achsen mit Rädern rechts und links, ggf. auch in Form von Doppel- oder Mehrfachbereifungen vorgesehen sein, aber auch Fahrwerksachsen mit nur einem Rad Verwendung finden, welche beispielsweise zentral montiert sein können. Je nach Anbaugerätetyp kann eine durchgehende, zentral einlenkbare Achse vorgesehen sein, oder eine Achse mit Einzelradaufhängung Verwendung finden, bei der die Räder rechts und links einzeln, ggf. aber auch gemeinsam über einen gekoppelten Lenkaktor eingelenkt werden können. Eine Achse kann hierbei selbstverständlich auch nur ein Achsstummel sein, an dem ein Rad von einer Seite her anbaubar ist.

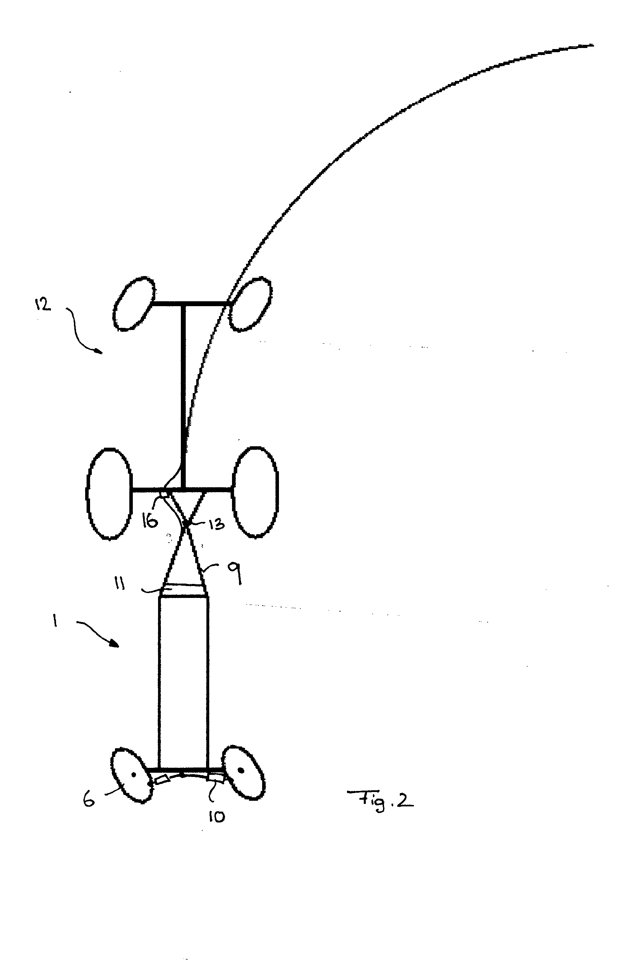

In Fig. 2 ist der Lenkaktor an der lenkbaren Achse des Anbaugeräts schematisch dargestellt und mit der Bezugsziffer 10 versehen, wobei als Lenkaktor verschiedene Aktoren wie beispielsweise ein Druckmittelzylinder, ein Spindeltrieb oder ein Elektromotor ggf. mit einem Untersetzungsgetriebe beispielsweise in Form eines Zahnstangengetriebes vorgesehen sein kann. Der genannte Lenkaktor 9 wird von einer Lenkwinkelsteuervorrichtung 11 angesteuert, die beispielsweise durch einen am Anbaugerät vorgesehenen Jobrechner realisiert sein kann, ggf. aber auch ein am Schlepper 12 vorgesehenes Steuergerät sein kann.

Die Lenkwinkelsteuervorrichtung 11 ist mit dem Isobus 16 des Schleppers 12 verbunden bzw. über eine Isobussteckdose lösbar verbindbar, so dass die Lenkwinkelsteuervorrichtung 11 die am Isobus 16 bereitgestellten Daten abgreifen kann.

Insbesondere liest die Lenkwinkelsteuervorrichtung 11 ein am Isobussystem des Schleppers 12 bereitgestelltes Kurvenfahrsignal des Schleppers aus, welches insbesondere ein Schlepperlenkwinkelsignal und/oder ein Schlepperkurvenradiussignal umfassen kann. Gegebenenfalls kann die Lenkwinkelsteuervorrichtung 11 auch ein Fahrgeschwindigkeitssignal vom Isobussystem des Schleppers erhalten, um auch die Fahrgeschwindigkeit für die Bestimmung des Lenkwinkeleinschlags am Anbaugerät zu berücksichtigen.

Die Lenkwinkelsteuervorrichtung 11 verarbeitet die vorgenannten vom Isobus bezogenen Kurvenfahrsignale und bestimmt hieraus den gewünschten Lenkwinkel für die lenkbare Achse bzw. die lenkbaren Achsen am Anbaugerät und bestimmt ein entsprechendes Ansteuersignal für den Lenkaktor 10.

## Patentansprüche

1. Vorrichtung zum Lenken eines landwirtschaftlichen Anbaugeräts (1), welches an einen Schlepper (12) anbaubar ist und zumindest eine lenkbare Achse (6) besitzt, mit einem Lenkaktor (10) zum Einlenken der genannten Achse (6) und/oder des daran vorgesehenen zumindest einen Rades des Anbaugeräts (1), sowie einer Lenkwinkelsteuervorrichtung (11) zur Ansteuerung des Lenkaktors (10), **dadurch gekennzeichnet, dass** die Lenkwinkelsteuervorrichtung (11) ein an einem Datenbussystem (16) des Schleppers (12) bereitgestelltes Schlepper-Kurvenfahrsignal, das den Lenkeinschlagwinkel der gelenkten Schlepperachse wiedergibt, zur Bestimmung des Ansteuersignals für den Lenkaktor (10) des Anbaugeräts (1) verwendet und den Lenkaktor (10) des Anbaugeräts (1) in Abhängigkeit des Lenkeinschlagwinkels der gelenkten Schlepperachse ansteuert.

2. Vorrichtung nach dem vorhergehenden Anspruch, wobei die Lenkwinkelsteuervorrichtung (11) ein am Bussystem (16) des Schleppers (12) bereitgestelltes Fahrgeschwindigkeitssignal zur Bestimmung des Ansteuersignals für den Lenkaktor (10) des Anbaugeräts (1) verwendet.

3. Vorrichtung nach einem der vorhergehenden Ansprüche, wobei das Bussystem (16) des Schleppers (12) ein genormtes Isobussystem ist.

## Claims

1. A device for steering an agricultural device (1) which can be attached to a tractor (12) and has at least one steerable axle (6), comprising a steering actuator (10) for guiding said axle (6) and/or the at least one wheel of the agricultural device (1) provided thereon, as well as a steering angle control device (11) for actuating the steering actuator (10), **characterized in that** the steering angle control device (11) uses a tractor cornering signal provided on a data bus system (16) of the tractor (12), which represents the steering lock angle of the steered tractor axle, for determining the actuation signal for the steering actuator (10) of the agricultural device (1) and actuates the steering actuator (10) of the agricultural device (1) in dependence on the steering lock angle of the steered tractor axle.

2. The device according to the preceding claim, wherein the steering angle control device (11) uses a traveling speed signal provided on the bus system (16) of the tractor (12) for determining the actuation signal for the steering actuator (10) of the agricultural device (1).

3. The device according to any of the preceding claims, wherein the bus system (16) of the tractor (12) is a standardized Isobus system.

## Revendications

1. Dispositif destiné à diriger un outil agricole (1), qui peut être monté à un tracteur (12) et qui possède au moins un essieu (6) directeur, comportant un actionneur de braquage (10) pour guider ledit essieu (6) et/ou ladite au moins une roue prévue sur celui-ci, de l'outil agricole (1), ainsi qu'un dispositif de commande d'angle de braquage (11) pour piloter l'actionneur de braquage (10), **caractérisé en ce que** le dispositif de commande d'angle de braquage (11) utilise un signal de virage de tracteur mis à disposition à un système de bus de données (16) du tracteur (12), lequel reproduit l'angle de braquage de l'essieu de tracteur dirigé, pour déterminer le signal de pilotage pour l'actionneur de braquage (10) de l'outil agricole (1) et pilote l'actionneur de braquage (10) de l'outil agricole (1) en fonction de l'angle de braquage de l'essieu de tracteur dirigé.

2. Dispositif selon la revendication précédente, dans lequel le dispositif de commande d'angle de braquage (11) utilise un signal de vitesse de roulement mis à disposition au système de bus (16) du tracteur (12) pour déterminer le signal de pilotage pour l'actionneur de braquage (10) de l'outil agricole (1).

3. Dispositif selon l'une des revendications précédentes, dans lequel le système de bus (16) du tracteur (12) est un système Isobus normalisé.
